# EUROPEAN PATENT APPLICATION

(11) **EP 4 368 371 A1**
(43) Date of publication of application: **15.05.2024**
(21) Application number: 22205962.8
(22) Date of filing: 08.11.2022
(51) Int. Cl.: B29C 64/106, A47C 27/00, B29C 64/393, B33Y 10/00, B33Y 80/00, B60N 2/00

(54) **METHOD FOR MANUFACTURING A DEFORMABLE ARTICLE**

(71) Applicant: Covestro Deutschland AG, 51373 Leverkusen (DE)
(72) Inventor: The designation of the inventor has not yet been filed
(74) Representative: Levpat

(57) **Abstract**

A method of manufacturing a deformable article comprises layerwise extruding, in parallel and according to machine-readable instructions, a plurality of thermoplastic elastomer melt beads from a plurality of jointly moved extrusion nozzles. Thereby the article with a density of ≥ 60 g/l and < 120 g/l and a compression strength according to DIN EN ISO 3386-1:2015-10at 40% compression of ≥ 1 kPa to ≤ 9 kPa is formed.

## Description

The current invention relates to a method of manufacturing a deformable article comprising layerwise extruding, in parallel and according to machine-readable instructions, a plurality of thermoplastic elastomer melt beads from a plurality of jointly moved extrusion nozzles. Thereby the article with a density of ≥ 60 g/l and < 120 g/l and a compression strength according to DIN EN ISO 3386-1:2015-10 at 40% compression of ≥ 1 kPa to ≤ 9 kPa is formed.

Existing technologies for thermoplastic cushioning materials are mainly based on polyesterfabric technologies designed in a way to produce interior high hardness polyester based springs ("3D fabrics", https://www.pressless.de/en/what-is-a-3d-fabric/, see also: https://www.ikea.com/nl/en/p/himlavalv-3d-mattress-for-cot-90321006/). The polyester product cannot be customized locally.

Other known processes to produce thermoplastic cushioning materials are e.g. based on additive manufacturing by thermoplastic powder or thermoplastic filament printing.

DE 10 2015 100 816 B3 discloses a process for producing a body-supporting element formed by a mattress, a cushion, a seat or part of a seat, comprising the process steps of defining print data which form a person-specific three-dimensional support structure and the production of the body-supporting element using the print data by means of a 3D printer. With the print data, it is possible to produce regions of different elasticity through the formation of cavities of different sizes and/or different number by means of the 3D printer.

US 2020/325951 A1 relates to a deformable body, wherein the body is constructed from a multiplicity of layers of a polymer construction material and in which a construction direction is defined perpendicular to the layers. The body preferably comprises layers with a multiplicity of curve pairs which are formed by the construction material and which run in the same direction as one another, the curve pairs comprise in each case two periodic curves running oppositely with respect to one another, and the curve pairs comprise portions of maximum spacing to one another and portions of minimum spacing to one another. In one part of the layers, in adjacent curve pairs, at least one portion of maximum spacing of one curve is connected to a portion of maximum spacing of an adjacent curve, in a further part of the layers, in adjacent curve pairs, at least one portion of maximum spacing of one curve is not connected to a portion of maximum spacing of an adjacent curve, in a further part of the layers, in adjacent curve pairs, at least a part of the portions of minimum spacing are connected to one another, and in a further part of the layers, in adjacent curve pairs, at least a part of the portions of minimum spacing are not connected to one another. The publication also relates to a method for producing the body and to a device for supporting and/or bearing a person having the body according to the invention. The body may be used inter alia as a mattress or as a vehicle seat.

With respect to the generation of instructions for extrusion machines the publication "FullControl GCode Designer: Open-source software for unconstrained design in additive manufacturing" by Andrew Gleadall, Additive Manufacturing, Volume 46, 2021, 102109, ISSN 2214-8604, https://doi.org/10.1016/j.addma.2021.102109 (https://www.sciencedirect.com/science/article/pii/S2214860421002748) discusses a design approach where the user defines every segment of the print-path along with all printing parameters, which may be related to geometric and non-geometric factors, at all points along the print-path. Machine control code (G-code) is directly generated by the software.

The present invention has the object of overcoming the limitations of the existing product technologies and to provide a pathway to the efficient production of soft cushioning bodies with a controlled dimension and local material compositions. This object has been achieved by a method according to claim 1 and a deformable article according to claim 13. Advantageous embodiments are the subject of the dependent claims. They can be combined freely unless the context clearly indicates otherwise.

Accordingly, a method of manufacturing a deformable article is provided comprising layerwise extruding, in parallel and according to machine-readable instructions, a plurality of thermoplastic elastomer melt beads from a plurality of jointly moved extrusion nozzles.

The number of layers may, for example, be ≥ 100 to ≤ 600, preferably ≥ 150 to ≤ 500 and more preferred ≥ 200 to ≤ 400.

The thermoplastic elastomer (TPE) may be a TPE comprising blockcopolymers of a hard and a soft block. Examples for suitable materials include thermoset polyurethane elastomers (PUR), thermoplastic copolyamides (TPA), thermoplastic copolyesters (TPC), thermoplastic elastomers based on olefins (TPO), styrene block copolymers (TPS), thermoplastic elastomers based on urethanes (TPU), crosslinked thermoplastic elastomers based on olefins (TPV), thermoplastic elastomers based on polyvinyl chloride (PVC), thermoplastic elastomers based on silicone, and combinations of at least two of these elastomers. Combinations of ≥ 3, ≥ 4 or ≥ 5 of these thermoplastic elastomers are also possible. It is also possible that the TPE material comprises a thermoplastic vulcanizate or that the TPE material comprises a vulcanizable rubber which can be extruded through a nozzle before later vulcanization.

For the purposes of the present invention a polymer is elastic if its elongation at break in the tensile test in accordance with DIN 53504 is ≥ 50% and provides a compression set of the required body after 15% compression (DIN ISO 815-1, 72 h, 23 °C) that can then by way of example be ≤ 50% , preferably ≤ 30% and particularly preferably ≤ 25%.

The TPE can also comprise further additives such as fillers, stabilizers and the like, and also further polymers. The total content of additives in the elastic polymer can by way of example be ≥ 0.1% by weight to ≤ 70% by weight, preferably ≥ 1% by weight to ≤ 40% by weight.

The melt volume rate (MVR) of suitable TPE in accordance with ISO 1133 (at 20 °C above the melting point, 5 kg, 10 min) can be ≥ 20 to ≤ 90 (preferably ≥ 30 to ≤ 80, more preferably ≥ 35 to ≤ 65) cm³/10 min.

The TPE, in particular if it is a TPU, may display a steep melt viscosity decrease with temperature. Melting characteristics are determined via the change in MVR (melt volume rate) according to ISO 1133 with a preheating time of 5 minutes and 10 kg load as a function of temperature. Melting characteristics are considered to be "steep" when the MVR at a starting temperature Tₓ has a starting value of 5 to 15 cm³/10 min and increases by no less than 20 cm3/10 min, preferred no less than 30 cm³/10 min as a result of an increase in temperature by 20 °C to Tₓ₊₂₀.

The TPE may have a melting point according to a dynamic mechanical analysis (DMA) measurement in torsion at 1 Hz, 1% strain, heating rate 2°C/min, defined as the crossover point between storage modulus G' and loss modulus G", between 80 °C and 260 °C, preferably between 100 °C and 240 °C, more preferred between 140 °C and 200 °C and most preferred ≤ 180 °C.

The TPE may have a glass transition temperature (according to DMA, DIN EN ISO 6721) either above 80 °C or between -80 °C and 10 °C, preferably between -70 °C and 0 °C and more preferred between -60 °C and -10 °C.

The machine-readable instructions are the output of a machine-readable instructions generating software whose input for generating the instructions comprises neither a representation of a three-dimensional computer-aided design (3D-CAD) model of the article to be manufactured nor software-generated sliced layers of a 3D-CAD model of the article to be manufactured. Particularly excluded are polygonal representations such as those found in STL files. Hence, a workflow where CAD software such as Autodesk or AutoCAD is used to design an article, followed by export to a slicer software which then generates the machine-readable instructions is excluded.

The extrusion nozzles move at a nozzle speed, the extruded melt beads have a diameter and the product of the nozzle speed and the extruded bead diameter is ≥ 25 mm²/s to ≤ 80 mm²/s. Preferred are ≥ 28 mm²/s to ≤ 75 mm²/s.

It is acknowledged that the extruded bead diameter may be greater than the internal diameter of the nozzle from which it has been extruded. The extruded bead diameter may be calculated using the formula for an ideal cylinder (V = (d/2)^{2 ∗} π ^{∗} h) with d being the bead diameter, V the volume of the cylinder and h the extrusion pathway length in G-code. The volume V can be calculated from the extruded bead weight and the density of the extruded material. Preferred values for the extruded bead diameter are ≥ 0. 35 mm to ≤ 0.65 mm and more preferred ≥ 0.40 mm to ≤ 0.62 mm.

The thermoplastic elastomer has a Shore A hardness according to DIN ISO 7619 of ≥ 45 and ≤ 94. Preferred is a Shore A hardness of ≥ 60 to ≤ 92 Shore A or ≥ 70 to ≤ 86 Shore A.

The extruded melt beads form layers in the article that have a height of ≥ 0.30 mm to ≤ 0.55 mm, preferably ≥ 0.35 mm to ≤ 0.55 mm.

The extruded bead diameter is ≥ 100% to ≤ 145% of the height of the layer which is formed by the bead. Preferred are ≥ 110% to ≤ 145% and more preferred ≥ 120% to ≤ 140%.

Each extrusion nozzle has an internal diameter of ≥ 0.3 to ≤ 0.7 mm. Individual nozzles may have different internal diameters falling within the stated ranges. The diameter difference may be ≥ 0.05 mm, preferably ≥ 0.1 mm but ≤ 0.4 mm.

Adjacent extruded beads in one layer have an average distance of ≥ 6 mm to ≤ 20 mm to each other, Preferred are ≥ 6 mm to ≤ 13 mm. It is also preferred that the distance between adjacent extruded beads in one layer is constant.

On average, each layer of the article contacts its preceding underlying layer by ≤ 60% of its associated extruded bead diameter. This layer overlay may me determined graphically by extracting extrusion pathway vector files.

The article comprises walls formed by extruding the thermoplastic elastomer and voids, thereby establishing a density and a compression strength according to DIN EN ISO 3386-1:2015-10 at 40% compression for the article.

Thereby the article with a density of ≥ 60 g/l and < 120 g/l (preferably ≥ 60 g/l to ≤ 110 g/1) and a compression strength according to DIN EN ISO 3386-1:2015-10 at 40% compression of ≥ 1 kPa to ≤ 9 kPa (preferably ≥ 1.5 kPa to ≤ 8 kPa, more preferred ≥ 2 kPa to ≤ 6 kPa) is formed. For the determination of the compression strength it is preferred that the fourth compression cycle is used.

It was surprising that the method of the invention succeeded in forming the article with the above-mentioned density and compression strength. The reason for the unexpected success lies in the fact that in standard FFF (fused filament fabrication) 3D printing, layer heights that approach 2/3 of the diameter of the nozzle are flagged in the slicer programs for providing unsuitable product due to bad interlayer adhesion and bad product resolution.

Surprisingly it was also found that the quality of cushioning products (deformable articles) and production efficiency of the cushioning products was especially good if the product of the nozzle speed and the extruded bead diameter is within the above-mentioned ranges.

In the production of the deformable article having the overall claimed densities and compression strengths steps may be performed that do not fall under the method according to the invention as long as steps are also performed that to fall under the method. This may be the case when denser or massive sides for the article are generated. It is preferred that ≥ 80 % or ≥ 90% of the volume of the deformable article have been produced by a method according to the invention.

It is possible that the extruded bead diameter is ≥ 70% to ≤ 150% of the internal diameter of the nozzle from which it has been extruded.

It is possible that the volume building speed of the resulting deformable article per nozzle is ≥ 0,4 1/h, preferably ≥ 0,6 1/h, more preferred ≥ 0,8 1/h and most preferred ≥ 1 l/h but also ≤ 2l/h.

It is possible that at least two nozzles are placed in parallel and at an 80°-100° (preferably 85° to 95°) angle to the travel direction of the nozzles. It is also possible that at least four nozzles are stacked in at least two rows with at least two nozzles placed in parallel and at an 80-100° (preferably 85° to 95°) angle to the travel direction of the nozzles.

It is possible that the molten beads of TPE are extruded at the same time from at least two nozzles with different volume output, with the volume output differing by ≥ 10 volume % and ≤ 300 volume % preferred by ≥ 20 volume % and ≤ 250 volume %, more preferred by ≥ 30 volume % and ≤ 200 volume % between a nozzle of lower volume output and higher volume output. Preferably the volume output difference is achieved with nozzles of the same nozzle diameter.

It is possible that the volume output of at least two nozzles changes over the build time of a deformable article by ≥ 20 volume % and ≤ 250 volume %, more preferred by ≥ 30 volume % and ≤ 200 volume %. Preferably the volume output change can take place inside of ≤ 20 build layers, preferably ≤ 10 build layers and more preferred ≤ 3 build layers.

It is possible that the volume output of at least two nozzles changes over at least one build layer of the construction for at least one time by switching from extrusion to travel mode.

It is possible that the weight output of at least one nozzle employed in the extrusion process differs from at least one other nozzle for ≥ 10 % of the build time, preferably by at least 15 weight%, more preferred at least 20 weight% and most preferred at least 50 weight% or at least cumulated 10 minutes of the build time with regards of an output measured in g / h.

It is possible that at least two nozzles are placed on a beam that can be moved in build direction with the longer dimension of the beam orthogonal to the build direction. The beam is fastened preferably in such a way that it can change its alignment by 60 to 150° allowing for a change of the build direction during the building process, preferably when moving to the next build layer.

It is possible that at least two nozzles are placed such that they can be moved parallelly in XY and optionally Z direction. It is also possible that the spatial movement of the nozzles in at least one direction is by ≥ factor 2 preferably ≥ factor 4, most preferably ≥ factor 8 smaller than the movement in at least one other direction.

It is possible that at least two nozzles are placed such that they can be moved at the same time parallelly and orthogonally in build direction. It is also possible that they can be mounted und any given XYZ, Delta or CoreXY or CoreXZ design known.

It is possible that at least two nozzles are placed such that the building table can be moved below the nozzle setup in XY and optionally Z direction. It is also possible that the building table can freely move in XY direction and the nozzles in Z direction. It is also possible that the spatial movement of the building table in at least one direction is by ≥ factor 2, preferably ≥ factor 4 smaller than the movement in at least one other direction.

It is possible that the building table can be heated or cooled. It is also possible that the method is performed in an enclosure for safety and/or heat control reasons.

It is also possible that nozzles are placed parallelly in a fixed position that can be moved in build direction with the longer dimension of the beam orthogonal to the build direction. The building platform is arranged in such a way that it can freely turn around, preferably in such a way that it can change its alignment by 60 to 150° allowing for a change of the build direction during the building process, preferably when moving to the next layer.

It is also possible to change materials, build densities and/or build geometries over the course of the production of an article in the method according to the invention. This can occur along the x-y plane as well as along the z axis. The resulting article from the method according to the invention may be white or transparent.

It is also possible that the number of beads applied in relation to the width of the build area of the body in one build layer is on average between 2 (line distance 5 mm) and 0.75 (line distance 15 mm) beads/cm building width, preferably between 1.7-0.8 and more preferred between 1.5 and 0.9.

It is also possible that at least the spacing distance of one nozzle to one other nozzle is lower by a factor of ≤ 0,9, preferably ≤ 0.8, more preferred ≤ 0.7 from the medium spacing of the nozzles over the width of the building volume.

It is also possible that the output of at least one nozzle is different from the average output of the nozzles over the width or the length of the building volume. Preferably at least the first and last of the parallel arranged nozzles have a ≥ 10% and ≤ 100% higher output than the average output of all nozzles.

It is also possible that the temperature of the nozzle is ≥ 30 °C and ≤ 110 °C above the melting point of the TPE (according to DMA measurement in torsion at 1 Hz, 1% strain, heating rate 2°C / min defined as the crossover point between storage modulus G' and loss modulus G"), preferably ≥ 40 °C and ≤ 100 °C and most preferably ≥ 40 °C and ≤ 90 °C above the melting point of the TPE.

It is also possible that the temperature of the building platform in the method is preferably ≥ 5°C and ≤ 100 °C preferably ≥ 10 °C and ≤ 60° and most preferably ≥ 15°C and ≤ 30 °C. In a most preferred embodiment the temperature of the building platform and the temperature in a potential building enclosure is ± 10 °C of the temperature of the surrounding.

It is also possible that the mean material temperature of the build over the building time is ± 10 °C of the temperature of the surrounding. Preferably the temperature of the build is ± 5°C of the temperature of the surrounding.

It is also possible that the extruded TPE beads are applied in a parallel way by a parallel array of multiple nozzles fed by TPE pellets that are molten before the nozzle.

The melting can be done conveniently in a commercial extruder, a heated piston or by compression molding with a heated nozzle plate or by extrusion through parallel melt spin pumps.

The parallel molten beads applied may provide in at least ≤ every 50 layers, preferably in at least ≤ every 30 layers, more preferably in at least ≤ every 20 layers and most preferably in at least every 3 layers that can be superimposed on another earlier layer.

It is possible that the multiple bead extruder is applying beads in average at least ≤ every 50 layers, preferably in at least ≤ every 30 layers, more preferably in at least ≤ every 20 layers and most preferably in at least every ≤ 3 layers in a fixed angle ≤ 160° and ≥ 20° to an earlier layer.

It is possible that an axis where multiple bead extruders are mounted on has a limited directional capability to move in distance in at least 1, preferred 2 directions (e.g. y and z) that is only ≤ 30% preferably ≤15% and more preferably ≤10% of the capability to move in at least one other direction (e.g. x), preferred 2 other directions (e.g. x and z)

It is possible that each extrusion nozzle can be controlled individually to extrude in an intended quantity that ranges from 0% to 300% (0-250, 0-200, 0-150, 0-100) of the medium extrusion rate over each nozzle of the entire multiple extrusion device.

It is possible that ≥ 50%, preferably ≥ 85% and most preferred ≥ 90% of the extrusion nozzles are of the same diameter. It is also possible that ≤ 50% preferably ≤ 15%, most preferably ≤ 10% of the nozzles are of a greater or smaller diameter where the difference of diameter is max. -50% and + 100%.

It is possible that the nozzles of a multiple bead extruder are fixed orthogonal to the shorter dimension Y of the build area. It is also possible that one extruder can feed a multiple of nozzles, preferably 2 to 8, more preferably 4-6.

It is possible that the TPE material can change during a layer or at least a different TPE material or colored TPE material is used for at least one layer of the build.

It is possible that multiple materials can be used in one build.

It is possible that multiple materials are extruded through one nozzle during the build.

It is possible that multiple materials are extruded through different nozzles during the build.

It is possible that multiple materials can have different colors to enable an easy separation of the material for material recycling.

It is possible that the same material can have different colors to enable an optical marking of different cushioning zones.

It is possible that on average at least 50% of the nozzles are extruding molten TPE beads in parallel.

It is possible that the volume output through at least one nozzle changes over the build time.

It is possible that different thermoplastic materials are used in different layers which for recycling can be easily separated horizontally in the XY axis providing clean and single quality materials.

In a preferred embodiment also non TPE materials and endless, long or short fiber reinforced materials can be used as part of the build.

It is possible that the method is controlled in a manner that provides a repeat period of layers of < 300 preferably < 200 seconds and most preferably < 100 seconds.

It is possible for the melt beads to be extruded onto a movable "continuous" printing platform, for example in the form of a conveyor belt, so that continuous printing is possible. It is also possible for the melt beads to be extruded onto a turntable platform that can be rotated by at least 90° or can be freely rotated.

It is possible that the building platform area has a size of ≥ 0.5 m², preferably ≥ 1 m² and more preferred ≥ 1.5 m². It is also possible that the building area is of a rectangular shape with a dimension of the two sides of ≥ 1:1 and ≤ 3:1.

According to one embodiment the input for the machine-readable instructions generating software comprises user-defined segments of a movement path for the extrusion nozzles, the definitions comprising spatial coordinates and extrusion instructions. A suitable software for this is the "FullControl GCode Designer" which has been mentioned in the introductory section of this disclosure.

According to another embodiment the output of the machine-readable instructions generating software comprises G-code.

According to another embodiment the thermoplastic elastomer is a thermoplastic polyurethane (TPU). Preferably the elastomer is a thermoplastic polyurethane elastomer obtainable from the reaction of at least the following components: a) at least one organic diisocyanate; b) at least one compound having isocyanate-reactive groups and having number-average molar mass (Mn) of ≥ 800 g/mol to ≤ 4000 g/mol and a number-average functionality of the entirety of the components b) of ≥ 1.8 to ≤ 2.5 and c) at least one chain extender having a molecular mass of 60 - 450 g/mol and a number-average functionality of the entirety of the chain extenders c) of 1.8 to 2.5.

Preference for a) is given to hexamethylene 1,6-diisocyanate, cyclohexane 1,4-diisocyanate, isophorone diisocyanate, dicyclohexylmethane diisocyanate, diphenylmethane diisocyanate isomer mixtures with more than 96% by weight content of diphenylmethane 4,4'-diisocyanate, and in particular diphenylmethane 4,4'-diisocyanate and naphthylene 1,5 diisocyanate. These diisocyanates can be used individually or in the form of mixtures with one another.

Preference for b) is given to polyetherdiols which, by way of example, may be produced from ethylene oxide and/or propylene oxide and/or tetrahydrofurane and may have a molecular weight distribution Mw/Mn, measured by universal GPC of ≤ 3, preferably ≤ 2 and most preferably ≤ 1,5. The number-average molar masses Mn of the polyetherdiols are preferably 800 to 6000 g/mol, more preferably between 900 and 4000 and most preferably between 1000 and 3000. These compounds can be used individually or in the form of mixtures with one another.

Preference for c) is given to ethanediol, butane-1,4-diol, hexane-1,6-diol, 1,4-di(β-hydroxyethyl)hydroquinone and 1,4-di(β-hydroxyethyl)bisphenol A. Mixtures of the abovementioned chain extenders can also be employed.

In a preferred TPU the mass fraction of polyethers with a molecular weight of ≥ 900 g/mol and ≤ 4000 g/mol with regard to the overall polyether content in is ≥ 60%, more preferred ≥ 70% and most preferably ≥ 80%.

It is preferred that the thermoplastic polyurethane comprises C₃ ether units such as polypropylene glycol units. For example, the mass fraction of polypropylene oxide-based polyethers with a molecular weight of ≥ 900 g/mol and ≤ 4000 g/mol with regard to the overall polyether content may be ≥ 60%, preferably ≥ 70% and most preferably ≥ 80%.

An example of such a material is a TPU with a composition that comprises more than 80% by weight of polypropylene glycol, MDI, butane diol and hexane diol. The polypropylene glycol used in the TPU may have a number average molecular weight Mn between 800 and 4000 g/mol and a polydispersity Mw/Mn of 1.5 or less.

According to another embodiment a cross-section of the article includes repeating units of: straight sections at an angle to each other, curved sections, curved sections at an angle to each other or a combination of two or more of the above-mentioned repeating units.

According to another embodiment a first cross-section of the article is different from a second cross-section which is parallel to the first cross-section.

According to another embodiment a first cross-section of the article corresponds to a rotated second cross-section of the article.

It is possible that the TPE material is extruded in such a way that between one layer and the next layer the applied molten beads of the second layer on average touch only at ≤ 60 % of the calculated applied bead width, preferably ≤ 50 %, more preferred ≤ 40 %, and most preferred ≤ 20 % of the material of the previously applied layer.

It is possible that the TPE material is extruded preferably in such a way that in one layer and at least one successive layer over the whole build the applied molten beads are layered on each other horizontally in an angle of ≥ 20° preferably ≥ 40° and most preferably ≥ 60° but ≤ 160°, preferably ≤ 140° and most preferably ≤ 120° to each other and touch only in a point while bridging a distance from point to point that is at least 8 times greater preferably 10 times greater and most preferably 12 times greater than the contact length of the touching point of two beads. Preferably these successive layers are repeated for more than 5, more preferably more than 10 and most preferably more than 30 times in the build.

Surprisingly even with this low surface connection area and volume density of a build the inventive process and material combination allows to produce cushioning materials with a sufficient strength of the build in XY and Z direction that it survives a cycle of 1000 repeated compressions by 40% of height according to DIN EN ISO 3386-1:2010-09 with a compression strength of ≤ 9 kPa and a compression set of ≤ 30%, preferably ≤ 20% and most preferably ≤ 10%.

It is possible that the extruded molten TPE beads in one layer describe in ≥ 20%, preferred ≥ 30% and ≥ 50% and most preferred ≥ 80% of the length of the build direction parallel curves to avoid time consuming and hard direction changes.

It is possible that the building concept includes a start to end straight movement of the nozzles in x or y direction in one layer and a zigzag movement in x and y direction of the nozzles in at least one layer in 3 preferably one layer in 2, where the nozzle performs a repeated lateral movement equal or greater the distance between two parallel spaced nozzles, preferably equal or greater 1.5 times the distance between two parallel spaced nozzles with an angel between the movement directions of >20° and < 120 °C.

It is possible that the nozzles are operating in a cartesian system with the majority of nozzles mounted parallelly on a beam which is arranged orthogonally to the longer side of the dimension of the build platform, the longest dimension of the build volume is called X, horizontally orthogonal of X is Y which is ≤ X and the preferably smallest dimension of the build volume lies orthogonally to X and X is called Z.

It is possible that the molten TPE beads extruded from the multiple bead extruder are applied to ≥ 10% preferred in ≥ 20% and most preferred ≥ 30% with regard to the absolute extrusion length of a bead through one nozzle during the build time in parallel and linear lines, orthogonal to the smaller dimension of the cushioning body (X or Y direction) and in ≥ 10 % preferred ≥ 20 %, most preferred ≥ 30 % in parallel lines in direction of the bigger build dimension (X or Y direction) of the cushioning body.

It is possible that an applied pattern of parallel lines changes over the z direction at least 1 time, preferred 2 times.

According to another embodiment extruded melt beads solidify without contacting more than one previously formed layer. Therefore these solidified beads are at least partially suspended freely. This also known as "bridging". In particular thermoplastic polyurethanes comprising C₃ ether units such as polypropylene glycol units are suited for this embodiment owing to their low Shore A hardness, rapid viscosity increase upon cooling but not too rapid crystallization, hence displaying good adhesion properties.

According to another embodiment ≥ 2 to ≤ 1000 (preferably ≥ 5 to ≤ 400, more preferred ≥ 10 to ≤ 200) jointly moved extrusion nozzles are used simultaneously to produce the article.

According to another embodiment the article has a width of ≥ 30 cm to ≤ 300 cm, a length of ≥ 30 cm to ≤ 300 cm, a height of ≥ 2 cm to ≤ 30 cm or a combination of at least two of the aforementioned dimensions.

According to another embodiment the article has a compression strength according to DIN EN ISO 3386-1:2015-10 at 40% compression in a first spatial direction and a second spatial direction, the compression strength in the first spatial direction being ≥ 150% (preferably ≥ 200% and more preferred ≥ 250%) of the compression strength in the second spatial direction. Such an article is easier to store under compression, for example as a mattress in a box.

According to another embodiment the melt beads are at least once extruded onto a fabric. The fabric may be air-permeable and may also stay attached to the finished article. The fabric may also be a distance fabric or 3D fabric as mentioned in the introductory section of this disclosure.

The invention also provides deformable article comprising a thermoplastic elastomer, the article having a density of ≥ 60 g/l and < 120 g/l (preferably ≥ 60 g/l to ≤ 110 g/l) and a compression strength according to DIN EN ISO 3386-1:2015-10 at 40% compression of ≥ 1 kPa to ≤ 9 kPa (preferably ≥ 1.5 kPa to ≤ 8 kPa, more preferred ≥ 2 kPa to ≤ 6 kPa) and obtainable by a method according to the invention. Without wishing to be limited to this observation the article may be described as a thermoplastic open-celled cushioning article. The article may be used in beds for hospitals and care institutions. Seats in vehicles are another preferred application sector, in particular in long-distance vehicles. The advantages of the deformable article of the invention are particularly successfully utilized in such applications as its ventilation capability not achievable in conventional foams.

The article may, for example, be a mattress, a cushion or a pillow. The article may have excellent washability, for example in a washing machine at 30 °C, 40 °C or 50 °C, and a low odor. The washing process can include common disinfection washing additives and solvents like isopropanol and ethanol since the TPE material provides good chemical resistance to common disinfectants. The article can be easily recycled by thermal recycling, by shredding and repelletizing or by chemical/hydrolysis recycling since it provides uniform and/or separable material qualities.

As already outlined in connection with the method according to the invention the thermoplastic elastomer of the article preferably is a thermoplastic polyurethane. It is also preferred that the thermoplastic polyurethane comprises C₃ ether units such as polypropylene glycol units. An example of such a material is a TPU with a composition that comprises more than 80% by weight of polypropylene glycol, MDI, butane diol and hexane diol. The polypropylene glycol used in the TPU may have a number average molecular weight Mn between 800 and 4000 g/mol and a polydispersity Mw/Mn of 1.5 or less.

As also already outlined above in connection with the method according to the invention the article may have a width of ≥ 30 cm to ≤ 300 cm, a length of ≥ 30 cm to ≤ 300 cm, a height of ≥ 2 cm to ≤ 20 cm or a combination of at least two of the aforementioned dimensions. The article may also have a compression strength according to DIN EN ISO 3386-1:2015-10 at 40% compression in a first spatial direction and a second spatial direction, the compression strength in the first spatial direction being ≥ 150% (preferably ≥ 200% and more preferred ≥ 250%) of the compression strength in the second spatial direction. Such an article is easier to store under compression, for example as a mattress in a box.

The article may have a high tensile strength in XY direction and a intended lower strength in z direction. The tear strength in Z direction is ≤ 30%, preferably ≤ 20% and most preferably ≤ 15%, but ≥ 1 % preferably ≥ 2% and most preferably ≥ 3% of the tensile strength in XY direction. This is very advantageous since a mattress can be separated along layers in a controlled way for recycling reasons and also to separate different TPE materials used in one build.

The article may have a compression set after 1000 cyclic compressions to 40% inside a time span of 24 hours of size of < 30% preferably < 20%, most preferably < 10%. The compression set measurement is based on DIN EN ISO 3386-1:2015-10 and performed on a Zwick Retro, 2kN Power load cell on 10cm^{∗} 10cm^{∗}5cm samples, with 0,05 kPa pre tension at 23°C and 50% humidity.

The article may have low odor emissions, VOC emissions and FOC properties.

The article may have a good flame resistance even in an unformulated state, for being a thermoplastic material, superior to standard non flame-retarded polyurethane foams and may not burn in a burning test according to EN 597-1:2015 and DIN EN 597-2:2016-03.

The article may provide gaps for receiving fans and/or sensors. Fans and/or sensors can then be installed into the gaps intended for that purpose.

The article may comprise an aerator for passing air through at least a portion of the deformable body. In the simplest case, air is conducted from the environment through at least one portion of the deformable article, thus permitting easy removal of moisture discharged as a result of sweating from a person using the device and sitting or lying on the article. This is sufficient to increase comfort during sitting or lying.

Perceived comfort can be further increased by using one or more heating elements to heat the air above room temperature (temperature > 20°C), or by using one or more cooling elements to cool the air (temperature ≤ 25°C).

According to one embodiment the article according further comprises actuators and/or sensors.

The present invention moreover provides an open celled cushioning material comprising a deformable body. The device of the invention can by way of example be a seat cushioning, a pillow, a mattress, upholstered furniture, or a vehicle seat. The device can comprise not only the deformable body of the invention, functioning as mattress or cushioned area, but also active and passive elements. Passive elements are components such as frames, joints, rollers and the like. Active elements can be servomotors, for example motors for adjusting seat geometry, sensors, or other elements which provide a desired functionality.

According to another embodiment the article further comprising elements within the deformable article which are adapted to be filled by a pressurized fluid. This may take the form of parallel or perpendicular linear spaces throughout the cushioning body that can be filled with inflatable tubes to change the cushioning behavior of the inventive body on demand by inflating or deflating the tubes via means of pressurized gases or liquids.

The present invention will be further described with reference to the following figures and examples without wishing to be limited by them.

### Materials used:

TPU A: thermoplastic polyurethane comprising polypropylene glycol units and having a Shore hardness according to DIN ISO 7619 of 80A. Available as Desmopan 6080A from Covestro Deutschland AG.
TPU B: thermoplastic polyurethane comprising polypropylene glycol units and having a Shore hardness according to DIN ISO 7619 of 45A. Available as Desmopan 6045A trial product from Covestro Deutschland AG.
TPU C: thermoplastic polyurethane comprising polypropylene glycol units and having a Shore hardness according to DIN ISO 7619 of 65A. Available as Desmopan 6064A from Covestro Deutschland AG.
TPU D: thermoplastic polyurethane comprising ether units and having a Shore hardness according to DIN ISO 7619 of 85D. Available as Desmopan 9385DU from Covestro Deutschland AG.
TPU E: thermoplastic polyurethane comprising ether units and having a Shore hardness according to DIN ISO 7619 of 65D. Available as Desmopan 9868DU from Covestro Deutschland AG.
TPU F: ester-based thermoplastic polyurethane having a Shore hardness according to DIN ISO 7619 of 60D. Available as Desmopan 460 from Covestro Deutschland AG.
PLA E: polylactic acid having a Shore hardness according to DIN ISO 7619 of 80D. Available as PLA 3D850 from filament2print.com.

### Building patterns:

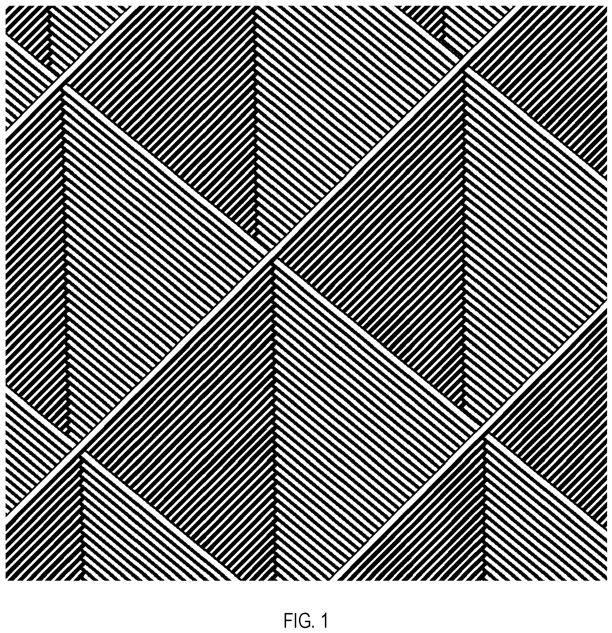

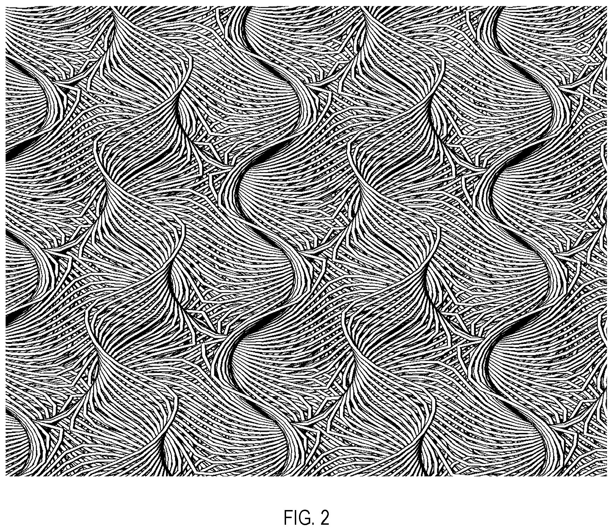

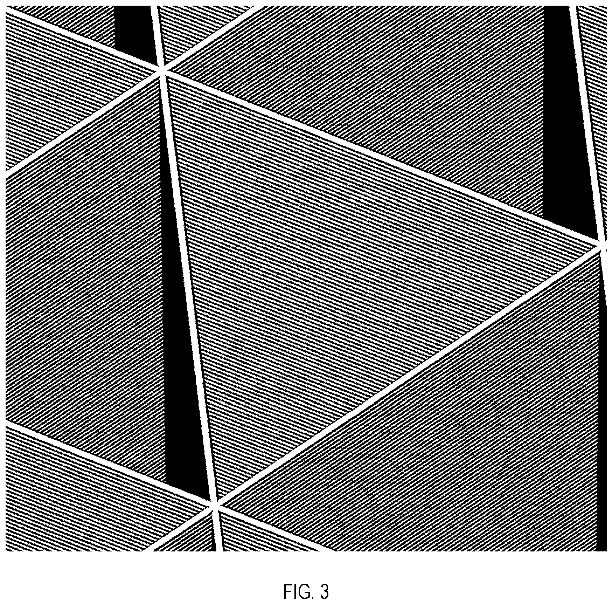

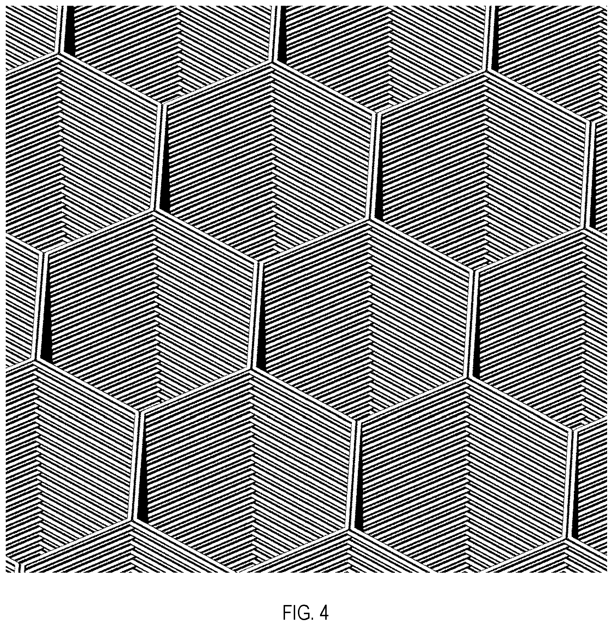

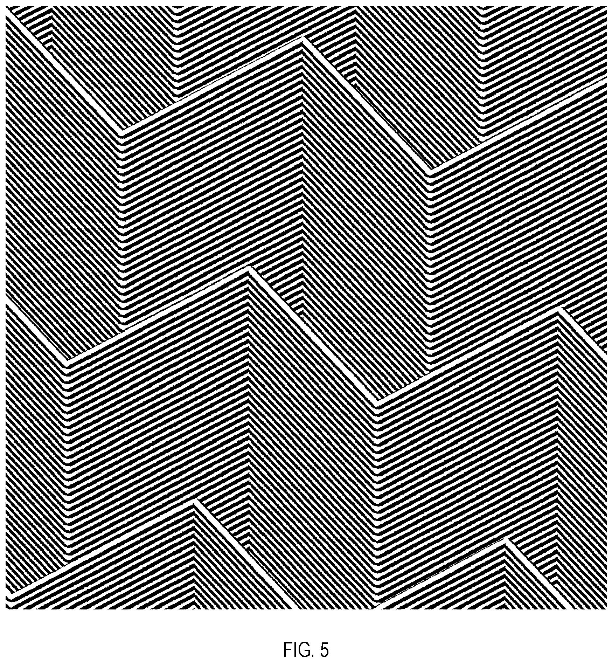

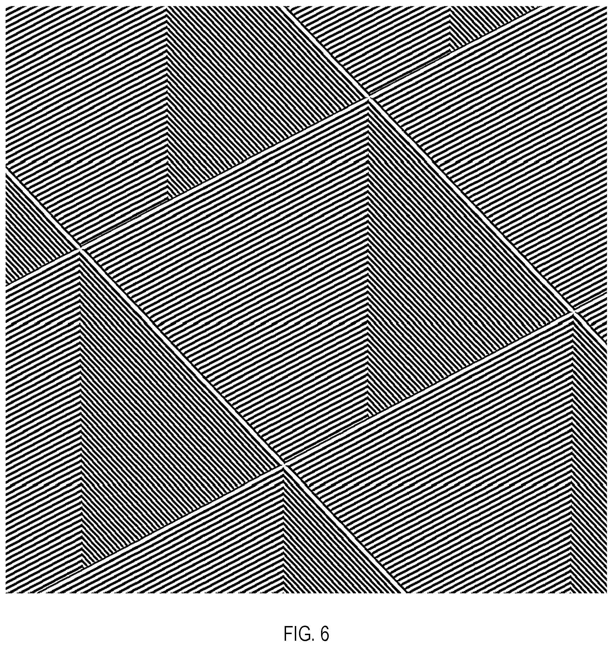

"Rect." is a rectangular pattern depicted in FIG. 1, "Gyr." is a gyroid pattern depicted in FIG. 2, "Triang." is a triangular pattern depicted in FIG. 3, "Honeyc." is a honeycomb pattern depicted in FIG. 4, the "Wiggle" pattern is depicted in FIG. 5 and the "Grid" pattern in FIG. 6.

### Production of deformable bodies:

All materials were used as pellets and extruded on a Tumaker Pro Dual 3D Printer with one or two independent pellet heads in order to simulate the parallel extrusion according to the invention on a laboratory scale. The extruder nozzle was kept at 250 °C if not otherwise indicated, the building plate and building room temperature where neither heated nor cooled and measured to be < 30 °C. Other conditions of experiments are given in the following tables.

The production files were based on G-code which was produced via the Fullcontroll GCODE Designer, or in case of non-inventive examples via pre-fabricated infill structures. The G-code was manually adopted to run on Tumaker Pro Dual 3D Printer. Printing times were calculated from G-code files.

In all tables the inventive examples are marked by an asterisk ("^{∗}"). In the tables, "Line distance" is the average distance between adjacent extruded beads. "Temperature" refers to the temperature of the extruder nozzle. "Average bead application speed" has been calculated from the code instructions. "Extruded bead diameter" has been calculated as described earlier "Stable structure" means the structure shows sufficient dimensional stability under compression strength testing providing > 95% height retention after measurement". Structure as designed" means the structure is produced according to the G-code instructions meaning the produced structure largely mirrors the dimensions of a structure as can be visualized by a common G-code viewer as is readily available in programs like Cura or Simplify 3d or nc-viewer. "Compression strength at 40% compression, 4th cycle" was determined according to DIN EN ISO 3386-1:2015-10. "Tensile set after 4th cycle" was determined 5 minutes after the cyclic compression measurement as the Delta value between the height before and after measurement in relation to the compression value.

"Layer overlay" refers to that, on average, each layer of the article contacts its preceding underlying layer by the stated percentage value of its associated average extruded melt bead diameter. Numbers may be determined by extracting the extrusion pathway of each layer from the G-code file and converting this into a vector file (e.g. by importing the code file into a spreadsheet software and exporting the corresponding xy plot as a scalable vector graphics (.SVG) file). The next step is importing the resulting vector file into a CAD program (e.g. Autodesk Fusion 360). The thickness of the imported lines is defined as the average extrusion bead diameter. Then the overlay of two subsequent layers in the CAD program can be determined. Dividing the resulting overlay area by the area of the upper layer and multiplying this result with 100 and thus gives the value for the layer overlay in %.

**Table 1. Variation of materials**

| **Trial Number** | **1*** | **2*** | **3*** | **4** | **5** | **6** | **7** |
|---|---|---|---|---|---|---|---|
| Material | TPU A | TPU B | TPU C | TPU D | TPU E | TPU F | PLA E |
| Hardness Shore A/D | 80A | 45.0A | 65A | 85D | 65D | 60D | 80D |
| Pattern | Rect. | Rect. | Rect. | Rect. | Rect. | Rect. | Rect. |
| Line distance / mm | 6.3 | 6.3 | 7.1 | 10.0 | 10.0 | 10.0 | 10.0 |
| Layer height / mm | 0.4 | 0.4 | 0.4 | 0.4 | 0.4 | 0.4 | 0.4 |
| Length X / mm | 100 | 180 | 100 | 100 | 100 | 100 | 100 |
| Length Y / mm | 100 | 190 | 100 | 100 | 100 | 100 | 100 |
| Length Z / mm | 50 | 50 | 50 | 50 | 50 | 50 | 50 |
| Temperature / °C | 250 | 250 | 250 | 250 | 250 | 250 | 220 |
| Average bead application speed / mm/s | 100 | 100 | 100 | 30 | 50 | 50 | 60 |
| Nozzle diameter / mm | 0.4 | 0.4 | 0.4 | 0.4 | 0.4 | 0.4 | 0.4 |
| Printing time / min | 36 | 118 | 31 | 118 | 70 | 71 | 61 |
| Weight measured / g | 54 | 152 | 41 | 44 | 42 | 39 | 35 |
| Density / g/l | 107.6 | 88.9 | 82.0 | 88 | 84 | 78 | 70 |
| Extruded bead diameter / mm | 0.52 | 0.48 | 0.48 | 0.48 | 0.48 | 0.47 | 0.45 |
| Stable structure | yes | Yes | yes | yes | yes | yes | yes |
| Compression strength 40%, 4th cycle / kPa | 5.0 | 2.86 | 1.6 | >10 | >10 | >10 | >10 |
| Tensile set after 4th cycle / % | <5% | <5% | <5% | | | | |
| Average bead speed ^{∗} bead diameter / mm²/s | 52 | 48 | 48 | 14 | 24 | 24 | 27 |
| Layer overlay | <20% | <20% | <20% | <20% | <20% | <20% | <20% |
| Extruded bead diameter/layer height / % | 130 | 120 | 120 | 120 | 120 | 117.5 | 112.5 |
| Extruded bead diameter/nozzle diameter / % | 130 | 120 | 120 | 120 | 120 | 117.5 | 112.5 |

**Table 2. Variation of layer height**

| **Trial Number** | **8** | **9** | **10*** | **11*** | **12** | **13** | **14** |
|---|---|---|---|---|---|---|---|
| Material | TPU A | TPU A | TPU A | TPU A | TPU A | TPU A | TPU A |
| Hardness Shore A/D | 80A | 80A | 80A | 80A | 80A | 80A | 80A |
| Pattern | Rect. | Rect. | Rect. | Rect. | Rect. | Rect. | Rect. |
| Line distance / mm | 8.3 | 8.3 | 8.3 | 8.3 | 8.3 | 8.3 | 8.3 |
| Layer height / mm | 0.2 | 0.3 | 0.4 | 0.5 | 0.6 | 0.7 | 0.8 |
| Length X / mm | 70 | 70 | 70 | 70 | 70 | 70 | 70 |
| Length Y / mm | 80 | 80 | 80 | 80 | 80 | 80 | 80 |
| Length Z / mm | 40 | 40 | 40 | 40 | 40 | 40 | 40 |
| Temperature / °C | 250 | 250 | 250 | 250 | 250 | 250 | 220 |
| Average bead application speed / mm/s | 100 | 100 | 100 | 100 | 100 | 100 | 100 |
| Nozzle diameter / mm | 0.4 | 0.4 | 0.4 | 0.4 | 0.4 | 0.4 | 0.4 |
| Printing time / min | 40 | 26 | 20 | 16 | 13 | 12 | 11 |
| Weight measured / g | 31 | 30 | 26 | 26 | 25 | 24 | 24 |
| Density / g/l | 139 | 133 | 117 | 118 | 111 | 107 | 107 |
| Extruded bead diameter / mm | 0.37 | 0.45 | 0.48 | 0.54 | 0.6 | 0.65 | 0.7 |
| Structure as designed | yes | yes | yes | yes | no | no | no |
| Compression strength 40%, 4th cycle / kPa | 32 | 14 | 7,6 | 8,3 | - | - | - |
| Average bead speed ^{∗} bead diameter / mm²/s | 37 | 45 | 48 | 54 | 60 | 65 | 70 |
| Layer overlay | <20% | <20% | <20% | <20% | <20% | <20% | <20% |
| Extruded bead diameter/layer height / % | 185 | 150 | 120 | 108 | 100 | 92.8 | 87.5 |
| Extruded bead diameter/nozzle diameter / % | 92.5 | 112.5 | 120 | 135 | 150 | 162.5 | 175 |

**Table 3. Variation of nozzle size**

| **Trial Number** | **15*** | **16** | **17*** | **18** | **19** |
|---|---|---|---|---|---|
| Material | TPU A | TPU A | TPU A | TPU A | TPU A |
| Hardness Shore A/D | 80A | 80A | 80A | 80A | 80A |
| Pattern | Rect. | Rect. | Rect. | Rect. | Rect. |
| Line distance / mm | 10 | 10 | 8.3 | 8.3 | 8.3 |
| Layer height / mm | 0.4 | 0.4 | 0.4 | 0.4 | 0.4 |
| Length X / mm | 100 | 100 | 100 | 100 | 100 |
| Length Y / mm | 100 | 100 | 100 | 100 | 100 |
| Length Z / mm | 50 | 50 | 50 | 50 | 50 |
| Temperature / °C | 250 | 250 | 250 | 250 | 250.0 |
| Average bead application speed / mm/s | 100 | 70 | 100 | 70 | 40 |
| Nozzle diameter / mm | 0.4 | 0.8 | 0.6 | 2 | 2 |
| Printing time / min | 23 | 39 | 27 | 39 | 69 |
| Weight measured / g | 37 | 31 | 36 | 39 | 74 |
| Density / g/l | 75 | 62 | 73 | 79 | 149 |
| Extruded bead diameter / mm | 0.54 | 0.45 | 0.49 | 0.51 | 0.7 |
| Structure as designed | yes | no | yes | no | Yes |
| Compression strength 40%, 4th cycle / kPa | <10 | | <10 | | >10 |
| Average bead speed ^{∗} bead diameter / mm²/s | 54 | 31.5 | 49 | 35.7 | 28 |
| Layer overlay | <20% | <20% | <20% | <20% | <20% |
| Extruded bead diameter/layer height / % | 135 | 113 | 123 | 128 | 175 |
| Extruded bead diameter/nozzle diameter / % | 135 | 56 | 82 | 26 | 35 |

**Table 4a. Variation of line distance**

| **Trial Number** | **20** | **21** | **22** | **23*** | **24*** | **25*** | **26** |
|---|---|---|---|---|---|---|---|
| Material | TPU A | TPU A | TPU A | TPU A | TPU A | TPU A | TPU A |
| Hardness Shore A/D | 80A | 80A | 80A | 80A | 80A | 80A | 80A |
| Pattern | Rect. | Rect. | Rect. | Rect. | Rect. | Rect. | Rect. |
| Line distance / mm | 3.3 | 4.2 | 5 | 6.3 | 8.3 | 10 | 25 |
| Layer height / mm | 0.4 | 0.4 | 0.4 | 0.4 | 0.4 | 0.4 | 0.4 |
| Length X / mm | 100 | 100 | 100 | 100 | 100 | 100 | 100 |
| Length Y / mm | 100 | 100 | 100 | 100 | 100 | 100 | 100 |
| Length Z / mm | 50 | 50 | 50 | 50 | 50 | 50 | 50 |
| Temperature / °C | 250 | 250 | 250 | 250 | 250 | 250 | 220 |
| Average bead application speed / mm/s | 100 | 100 | 100 | 100 | 100 | 60 | 100 |
| Nozzle diameter / mm | 0.4 | 0.4 | 0.4 | 0.4 | 0.4 | 0.4 | 0.4 |
| Printing time / min | 65 | 52 | 44 | 35 | 27 | 38 | 22 |
| Weight measured / g | 95 | 77 | 65 | 54 | 53 | 41 | 23 |
| Density / g/l | 191 | 145 | 131 | 108 | 86 | 81 | 45 |
| Extruded bead diameter / mm | 0.51 | 0.51 | 0.51 | 0.52 | 0.53 | 0.56 | 0.62 |
| Structure as designed | yes | yes | yes | yes | yes | yes | Yes |
| Compression strength 40%, 4th cycle / kPa | 26 | 14.2 | 10.2 | 5 | 2.6 | 2.3 | 0.5 |
| Average bead speed ^{∗} bead diameter / mm²/s | 51 | 51 | 51 | 52 | 53 | 34 | 62 |
| Layer overlay | <20% | <20% | <20% | <20% | <20% | <20% | <20% |
| Extruded bead diameter/layer height / % | 128 | 128 | 128 | 130 | 133 | 140 | 155 |
| Extruded bead diameter/nozzle diameter / % | 128 | 128 | 128 | 130 | 133 | 140 | 155 |

**Table 4b. Variation of line distance**

| **Trial Number** | **27** | **28*** | **29*** | **30*** | **31*** | **32** |
|---|---|---|---|---|---|---|
| Material | TPU A | TPU A | TPU A | TPU A | TPU A | TPU A |
| Hardness Shore A/D | 80A | 80A | 80A | 80A | 80A | 80A |
| Pattern | Gyr. | Gyr. | Gyr. | Gyr. | Gyr. | Gyr. |
| Line distance / mm | 16.7 | 12.5 | 11.1 | 10.0 | 8.3 | 6.3 |
| Layer height / mm | 0.40 | 0.40 | 0.40 | 0.40 | 0.40 | 0.40 |
| Length X / mm | 100 | 100 | 100 | 100 | 100 | 100 |
| Length Y / mm | 100 | 100 | 100 | 100 | 100 | 100 |
| Length Z / mm | 50 | 50 | 50 | 50 | 50 | 50 |
| Temperature / °C | 250 | 250 | 250 | 250 | 250 | 250 |
| Average bead application speed / mm/s | 60 | 60 | 60 | 60 | 60 | 60 |
| Nozzle diameter / mm | 0.40 | 0.40 | 0.40 | 0.40 | 0.40 | 0.40 |
| Printing time / min | 31 | 40 | 44 | 49 | 58 | 76 |
| Weight measured / g | 26 | 31 | 36 | 38 | 47 | 60 |
| Density / g/l | 52 | 62 | 72 | 76 | 94 | 120 |
| Extruded bead diameter / mm | 0.47 | 0.48 | 0.49 | 0.48 | 0.49 | 0.48 |
| Structure as designed | no | yes | yes | yes | yes | Yes |
| Compression strength 40%, 4th cycle / kPa | | 2.8 | 4.4 | 4.8 | 8.1 | 16.2 |
| Average bead speed ^{∗} bead diameter / mm²/s | 28 | 29 | 29 | 29 | 29 | 29 |
| Layer overlay | <60% | <60% | <60% | <60% | <60% | <60% |
| Extruded bead diameter/layer height / % | 118 | 120 | 123 | 120 | 123 | 120 |
| Extruded bead diameter/nozzle diameter / % | 118 | 120 | 123 | 120 | 123 | 120 |

**Table 5. Variation of bead application speed**

| **Trial Number** | **33** | **34** | **35*** | **36*** | **37*** | **38** |
|---|---|---|---|---|---|---|
| Material | TPU A | TPU A | TPU A | TPU A | TPU A | TPU A |
| Hardness Shore A/D | 80A | 80A | 80A | 80A | 80A | 80A |
| Pattern | Rect. | Rect. | Rect. | Rect. | Rect. | Rect. |
| Line distance / mm | 10 | 10 | 10 | 10 | 10 | 10 |
| Layer height / mm | 0.4 | 0.4 | 0.4 | 0.4 | 0.4 | 0.4 |
| Length X / mm | 100 | 100 | 100 | 100 | 100 | 100 |
| Length Y / mm | 100 | 100 | 100 | 100 | 100 | 100 |
| Length Z / mm | 50 | 50 | 50 | 50 | 50 | 50 |
| Temperature / °C | 250 | 250 | 250 | 250 | 250 | 250 |
| Average bead application speed / mm/s | 20 | 40 | 60 | 120 | 150 | 180 |
| Nozzle diameter / mm | 0.4 | 0.4 | 0.4 | 0.4 | 0.4 | 0.4 |
| Printing time / min | 135 | 68 | 45 | 23 | 18 | 15.0 |
| Weight measured / g | 48 | 44 | 42 | 38 | 38 | 38 |
| Density / g/l | 96 | 88 | 83 | 76 | 76 | 75 |
| Extruded bead diameter / mm | 0.56 | 0.54 | 0.52 | 0.50 | 0.50 | 0.50 |
| Structure as designed | no | yes | yes | yes | yes | No |
| Compression strength 40%, 4th cycle / kPa | 5.4 | 3.0 | 2.2 | 1.7 | 2.1 | |
| Average bead speed ^{∗} bead diameter / mm²/s | 11 | 22 | 31 | 60 | 75 | 90 |
| Layer overlay | <20% | <20% | <20% | <20% | <20% | <20% |
| Extruded bead diameter/layer height / % | 140 | 135 | 130 | 125 | 125 | 125 |
| Extruded bead diameter/nozzle diameter / % | 140 | 135 | 130 | 125 | 125 | 125 |

**Table 6. Variation of application pattern**

| **Trial Number** | **39*** | **40*** | **41** | **42** | **43** | **44** |
|---|---|---|---|---|---|---|
| Material | TPU A | TPU A | TPU A | TPU A | TPU A | TPU A |
| Hardness Shore A/D | 80A | 80A | 80A | 80A | 80A | 80A |
| Pattern | Rect. | Gyroid | Triang. | Honeyc. | Wiggle | Grid |
| Line distance / mm | 10 | 10 | 10 | 10 | 10 | 10 |
| Layer height / mm | 0.4 | 0.4 | 0.4 | 0.4 | 0.4 | 0.4 |
| Length X / mm | 100 | 100 | 100 | 100 | 100 | 100 |
| Length Y / mm | 100 | 100 | 100 | 100 | 100 | 100 |
| Length Z / mm | 50 | 50 | 50 | 50 | 50 | 50 |
| Temperature / °C | 250 | 250 | 250 | 250 | 250 | 250 |
| Average bead application speed / mm/s | 60 | 60 | 60 | 50 | 60 | 60 |
| Nozzle diameter / mm | 0.4 | 0.4 | 0.4 | 0.4 | 0.4 | 0.4 |
| Printing time / min | 38 | 49 | 38 | 78 | 49 | 64 |
| Weight measured / g | 41 | 38 | 47 | 46 | 39 | 38 |
| Density / g/l | 81 | 76 | 94 | 91 | 78 | 76 |
| Extruded bead diameter / mm | 0.56 | 0.48 | 0.60 | 0.48 | 0.49 | 0.51 |
| Structure as designed | Yes | yes | yes | yes | yes | Yes |
| Stable structure | Yes | yes | yes | yes | no | Yes |
| Compression strength 40%, 4th cycle / kPa | 2.6 | 4.8 | 7.6 | >10 | <1 | >10 |
| Average bead speed ^{∗} bead diameter / mm²/s | 34 | 29 | 36 | 24 | 29 | 31 |
| Parallel printing possible | Yes | yes | no | no | yes | No |
| Layer overlay | <20% | <60% | >60% | >60% | >60% | >60% |
| Extruded bead diameter/layer height / % | 140 | 120 | 150 | 120 | 122.5 | 127.5 |
| Extruded bead diameter/nozzle diameter / % | 140 | 120 | 150 | 120 | 122.5 | 127.5 |

**Table 7. Variation of extrusion volume**

| **Trial Number** | **45** | **46*** | **47*** | **48*** | **49** |
|---|---|---|---|---|---|
| Material | TPU A | TPU A | TPU A | TPU A | TPU A |
| Hardness Shore A/D | 80A | 80A | 80A | 80A | 80A |
| Pattern | Rect. | Rect. | Rect. | Rect. | Rect. |
| Line distance / mm | 10 | 10 | 10 | 10 | 10 |
| Layer height / mm | 0.4 | 0.4 | 0.4 | 0.4 | 0.4 |
| Length X / mm | 100 | 100 | 100 | 100 | 100 |
| Length Y / mm | 100 | 100 | 100 | 100 | 100 |
| Length Z / mm | 50 | 50 | 50 | 50 | 50 |
| Temperature / °C | 250 | 250 | 250 | 250 | 250 |
| Average bead application speed / mm/s | 100 | 100 | 100 | 100 | 100 |
| Nozzle diameter / mm | 0.4 | 0.4 | 0.4 | 0.4 | 0.4 |
| Printing time / min | 23 | 23 | 23 | 23 | 23 |
| Weight measured / g | 27 | 33 | 40 | 44 | 61 |
| Density / g/l | 53 | 66 | 79 | 89 | 123 |
| Extruded bead diameter / mm | 0.45 | 0.50 | 0.55 | 0.58 | 0.69 |
| Structure as designed | yes | yes | yes | yes | Yes |
| Compression strength 40%, 4th cycle / kPa | 0.9 | 1.1 | 2.1 | 4.1 | 19.0 |
| Average bead speed ^{∗} bead diameter / mm²/s | 45 | 50 | 55 | 58 | 69 |
| Layer overlay | <20% | <20% | <20% | <20% | <20% |
| Extruded bead diameter/layer height / % | 112.5 | 125 | 137.5 | 145 | 172.5 |
| Extruded bead diameter/nozzle diameter / % | 112.5 | 125 | 137.5 | 145 | 172.5 |

## Claims

1. A method of manufacturing a deformable article comprising layerwise extruding, in parallel and according to machine-readable instructions, a plurality of thermoplastic elastomer melt beads from a plurality of jointly moved extrusion nozzles,
wherein the machine-readable instructions are the output of a machine-readable instructions generating software whose input for generating the instructions comprises neither a representation of a three-dimensional computer-aided design (3D-CAD) model of the article to be manufactured nor software-generated sliced layers of a 3D-CAD model of the article to be manufactured,
wherein the extrusion nozzles move at a nozzle speed, the extruded melt beads have a diameter and the product of the nozzle speed and the extruded bead diameter is ≥ 25 mm²/s to ≤ 80 mm²/s,
wherein the thermoplastic elastomer has a Shore A hardness according to DIN ISO 7619 of ≥ 45 and ≤ 94,
wherein the extruded melt beads form layers in the article having a height of ≥ 0.3 mm to ≤ 0.55 mm,
wherein the extruded bead diameter is > 100% to ≤ 145% of the height of the layer which is formed by the bead,
wherein each extrusion nozzle has an internal diameter of ≥ 0.3 to ≤ 0.7 mm, wherein adjacent extruded beads in one layer have an average distance of ≥ 6 mm to ≤ 20 mm to each other,
wherein, on average, each layer of the article contacts its preceding underlying layer by ≤ 60% of its associated average extruded melt bead diameter,
wherein the article comprises walls formed by extruding the thermoplastic elastomer and voids, thereby establishing a density and a compression strength according to DIN EN ISO 3386-1:2015-10 at 40% compression for the article,
thereby forming the article with a density of ≥ 60 g/l and < 120 g/l and a compression strength according to DIN EN ISO 3386-1:2015-10 at 40% compression of ≥ 1 kPa to ≤ 9 kPa.

2. The method according to claim 1, wherein the input for the machine-readable instructions generating software comprises user-defined segments of a movement path for the extrusion nozzles, the definitions comprising spatial coordinates and extrusion instructions.

3. The method according to claim 1 or 2, wherein the output of the machine-readable instructions generating software comprises G-code.

4. The method according to any one of the preceding claims, wherein the thermoplastic elastomer is a thermoplastic polyurethane.

5. The method according to any one of the preceding claims, wherein a cross-section of the article includes repeating units of: straight sections at an angle to each other, curved sections, curved sections at an angle to each other or a combination of two or more of the above-mentioned repeating units.

6. The method according to any one of the preceding claims, wherein a first cross-section of the article is different from a second cross-section which is parallel to the first cross-section.

7. The method according to any one of the preceding claims, wherein a first cross-section of the article corresponds to a rotated second cross-section of the article.

8. The method according to any one of the preceding claims, wherein extruded melt beads solidify without contacting more than one previously formed layer.

9. The method according to any one of the preceding claims, wherein ≥ 2 to ≤ 1000 jointly moved extrusion nozzles are used simultaneously to produce the article.

10. The method according to any one of the preceding claims, wherein the article has a width of ≥ 30 cm to ≤ 300 cm, a length of ≥ 30 cm to ≤ 300 cm, a height of ≥ 2 cm to ≤ 30 cm or a combination of at least two of the aforementioned dimensions.

11. The method according to any one of the preceding claims, wherein the article has a compression strength according to DIN EN ISO 3386-1:2015-10 at 40% compression in a first spatial direction and a second spatial direction, the compression strength in the first spatial direction being ≥ 150% of the compression strength in the second spatial direction.

12. The method according to any one of the preceding claims, wherein the melt beads are at least once extruded onto a fabric.

13. A deformable article comprising a thermoplastic elastomer, the article having a density of ≥ 60 g/l and < 120 g/l and a compression strength according to DIN EN ISO 3386-1:2015-10 at 40% compression of ≥ 1 kPa to ≤ 9 kPa, obtainable by a method according to any one of claims 1 to 12.

14. The article according to claim 13, further comprising actuators and/or sensors.

15. The article according to claim 13 or 14, further comprising elements within the deformable article which are adapted to be filled by a pressurized fluid.
